# EUROPEAN PATENT SPECIFICATION

(11) **EP 2 859 718 B1**
(45) Date of publication and mention of the grant of the patent: **30.05.2018**
(21) Application number: 13801324.8
(22) Date of filing: 07.06.2013
(51) Int. Cl.: G06T 11/60, H04N 5/232

(54) **AUGMENTED REALITY ARRANGEMENT OF NEARBY LOCATION INFORMATION**
ANORDNUNG FÜR ERWEITERTE REALITÄT VON INFORMATIONEN ZU ORTEN IN DER NÄHE
CONFIGURATION DE RÉALITÉ AUGMENTÉE D'INFORMATIONS SUR UN EMPLACEMENT À PROXIMITÉ

(30) Priority: 08.06.2012 US 201261657619 P; 31.10.2012 US 201213665852
(43) Date of publication of application: 15.04.2015
(73) Proprietor: Samsung Electronics Co., Ltd., Suwon-si, Gyeonggi-do 443-742 (KR)
(72) Inventor: KIM, Byoung-ju, Walnut Creek, California 94597 (US); PARK, Eun-young, San Francisco, California 94133 (US); ALVAREZ, Jesse, Oakland, California 94607 (US); DESAI, Prashant, San Francisco, California 94111 (US)
(74) Representative: HGF Limited
(86) International application number: PCT/KR2013/005026
(87) International publication number: WO 2013/183957

(56) References cited:
- EP-A1- 2 400 733
- EP-A1- 2 418 621
- EP-A2- 2 410 490
- US-A1- 2010 195 872
- US-A1- 2010 325 563
- US-A1- 2011 164 163
- US-A1- 2011 170 787
- US-A1- 2011 199 479
- US-A1- 2012 130 561

## Description

### Technical Field

The present invention relates generally to augmented reality of a physical environment, and in particular to augmented reality arrangement information for a physical environment, on an electronic device.

### Background Art

With the proliferation of electronic devices such as mobile electronic devices, users increasingly rely on such devices for obtaining information of interest to them. Many mobile electronic devices such as smartphones provide the ability for a user to view local maps and the location of the user relative to the map.

### Disclosure of Invention

### Technical Problem

Such mobile electronic devices further allow a user to enter a destination and receive driving directions and information about the destination such as local services as request by the user. The requested information is displayed on a display of the mobile device for viewing by the user.
EP 2 400 733 A1 discloses a mobile terminal for displaying augmented-reality information in which a preview image is generated by a camera module and object information for one or more objects shown in the preview image is displayed on the display module.
EP 2 418 621 A1 discloses a method for providing augmented reality (AR) information of a concealed object. The method includes acquiring an image of a real environment; defining a reference object included in the acquired image; receiving information about concealed objects according to image capturing position information obtained for a position associated with the reference object, the concealed objects being disposed behind the reference object along or about a direction from the image capturing position to the reference object; and outputting the received information about concealed objects. The reference object may be defined by user selection of an object visible in the image of the real environment.

### Solution to Problem

The present invention relates generally to augmented reality arrangement of information on an electronic device for a physical environment. In one embodiment the present invention provides augmented reality arrangement and display of nearby point-of-interest information on an electronic device.

### Advantageous Effects of Invention

The present invention provides visually intuitive augmented reality arrangement and display of nearby attraction information on the mobile device display

### Brief Description of Drawings

For a fuller understanding of the nature and advantages of the invention, as well as a preferred mode of use, reference should be made to the following detailed description read in conjunction with the accompanying drawings, in which:
FIGS. 1A-1B show block diagrams of architecture on a system for augmented reality arrangement of nearby location information, according to an embodiment of the invention.
FIGS. 2A-2C show an example sequence of steps for augmented reality arrangement of nearby location information, according to an embodiment of the invention.
FIG. 3 shows an example scenario for augmented reality arrangement of nearby location information, according to an embodiment of the invention.
FIG. 4 shows an example scenario for augmented reality arrangement of nearby location information with the user panning a mobile device camera, according to an embodiment of the invention.
FIG. 5 shows an example scenario for augmented reality arrangement of nearby location information after the user has completed panning the mobile device camera, according to an embodiment of the invention.
FIG. 6 shows a diagrammatical example of augmented reality arrangement and display of points of interest, according to an embodiment of the invention.
FIG. 7 shows a flowchart of a discovery process for augmented reality arrangement of nearby location information, according to an embodiment of the invention.
FIG. 8 is a high-level block diagram showing an information processing system comprising a computing system implementing an embodiment of the present invention.

### Best Mode for Carrying out the Invention

In one embodiment, a method of displaying information of interest to a user on an electronic device comprises capturing an image of surrounding area via a camera, displaying the image on a display of the electronic device, identifying objects of interest in a portion of the image as points of interest (POI) to the user, obtaining POI information about the points of interest, arranging said POI information, and displaying the arranged information with augmented reality on the image for the identified objects.

### Mode for the Invention

The following description is made for the purpose of illustrating the general principles of the invention and is not meant to limit the inventive concepts claimed herein. Further, particular features described herein can be used in combination with other described features in each of the various possible combinations and permutations. Unless otherwise specifically defined herein, all terms are to be given their broadest possible interpretation including meanings implied from the specification as well as meanings understood by those skilled in the art and/or as defined in dictionaries, treatises, etc.

The present invention relates generally to augmented reality arrangement of information on an electronic device for a physical environment. In one embodiment, the present invention provides augmented reality arrangement and display of nearby point-of-interest information on an electronic device.

In one embodiment, the electronic device comprises a mobile electronic device capable of data communication over a communication link such as a wireless communication link. Examples of such mobile device include a mobile phone device, a mobile tablet device, etc.

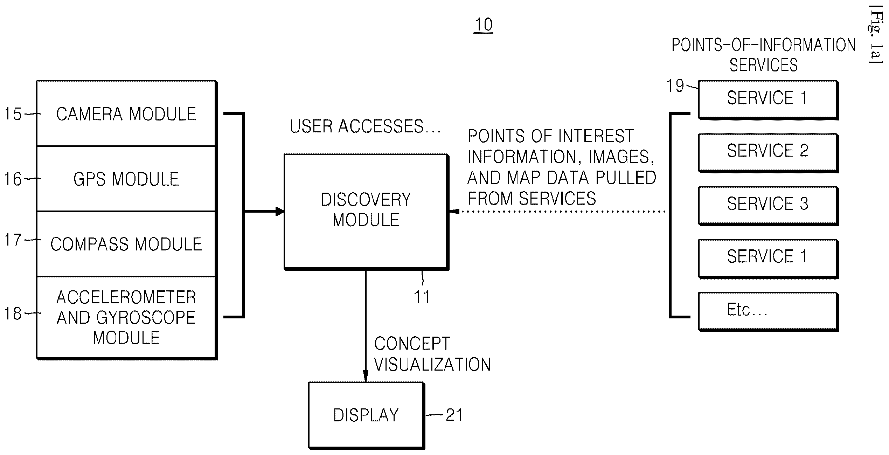

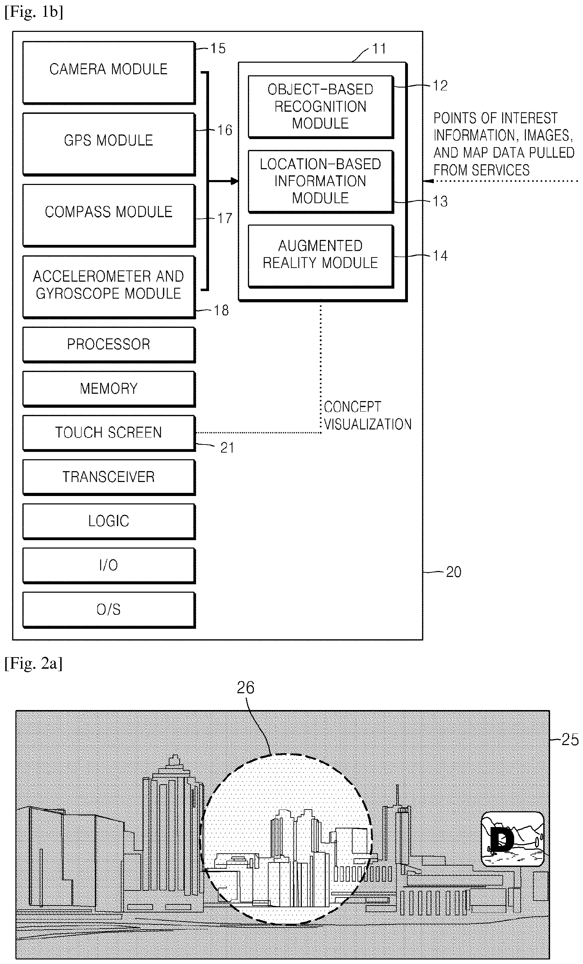

FIG. 1A shows a functional block diagram of an embodiment of an augmented reality arrangement system 10 for providing augmented reality arrangement and display of nearby point of interest information on an electronic device (such as mobile device 20 as shown in FIG. 1B), according to an embodiment of the invention.

The system 10 comprises a discovery module 11 including an augmented reality module 14 (FIG. 1B), a location-based information module 13 (FIG. 1B), and an object-based recognition module 12 (FIG. 1B). The discovery module 11 utilizes mobile device hardware functionality including: video camera 15, global positioning satellite (GPS) receiver module 16, compass module 17, and accelerometer and gyroscope module 18.

The camera module is used to capture images of surroundings. The GPS module is used to identify a current location of the mobile device (i.e., user). The compass module is used to identify direction of the mobile device. The accelerometer and gyroscope module is used to identify tilt of the mobile device and distribute point-of-interest (POI) icons in space.

The system 10 provides visually intuitive augmented reality arrangement and display of nearby attraction information on the mobile device display 21. The system 10 provides a simple, fluid, and responsive user experience.

Augmented reality (AR) function comprises a live, direct or indirect, view of a physical, real-world environment whose elements are augmented by computer-generated sensory input such as sound, video, graphics or GPS data. In one example, AR technology is utilized by integrating information including camera data, location data, sensor data (i.e., magnetic field, accelerometer, rotation vector), etc. For example, Google Android mobile operating system application programming interface (API) components providing such information can be employed.

Location-based information/service function comprises a general class of computer program-level services 19 used to include specific controls for location and time data as control features in computer programs and mobile applications. In one example, location-based information and related service are components of mobile applications. In one implementation, a location-based service component may be implemented by integrating the following Google Android mobile operating system API components: (1) Access_Fine_Location, (2) Location Provider, (3) Location Listener, (4) Location Updates, and (5) Reverse GeoCoding.

Object-based recognition comprises, in computer vision, finding a given object in an image or video sequence. In one example, object-based recognition may be implemented by leveraging algorithms that carry out the following operations: (1) Detail/ feature extraction from continuous live view stream, (2) comparison to existing photo database, and (3) instantaneous delivery of results.

In one embodiment, a user aims a video camera of a mobile device (e.g., smartphone, tablet) including the discovery module, towards a target physical location such as a city center the user is visiting. A live image of the physical location from the camera application is processed by the mobile device and displayed on a display monitor of the mobile device.

In one embodiment, once activated, the discovery module enables the user to "scan" the surroundings by pointing the camera to frame content of interest within a visual spotlight of the physical location image on the display screen.

Using the location-based information module, the discovery module obtains nearby point-of-interest location information. The location-based information module queries points of information services (e.g., on the Internet via wireless link) to obtain relevant point-of-interest information search results.

In one embodiment, using the object-based recognition module, the discovery module finds each point of interest as a given object in the physical location image. This function continuously extracts features and attributes while running the discovery module, and after running a comparison search with existing image databases, the function is able to "recognize" points of interest and place call out labels to identify the location of each POI.

In one embodiment, the discovery module 11 includes a concept visualization module 22 (FIG. 1B) that implements a concept visualization function for displaying said nearby point-of-interest location information on the display device corresponding to the recognized points of interest (i.e., objects) in said image. In one example, the concept visualization module may be implemented in the augmented reality module 14 (FIG. 1B).

In one implementation, the point-of-interest information is displayed as thumbnails using augmented reality, sorted left-to-right on the display screen based on distance from the mobile device held by the user (e.g., closest point-of-interest being left-most on the display).

In one embodiment, the discovery module updates the thumbnails and refreshes them should the user shift to "scan" another target with the mobile device camera. When the user selects (e.g., taps on) any of these thumbnails, the discovery module obtains and displays information units (e.g., cards) that contain more detailed point-of-interest information.

In one embodiment, points of interest are displayed using GPS to identify which locations are in the vicinity, and the compass is used to determine which direction these points of interest are. The discovery module arranges the points of interest information on the display by sorting and displaying that information based on distance from the user.

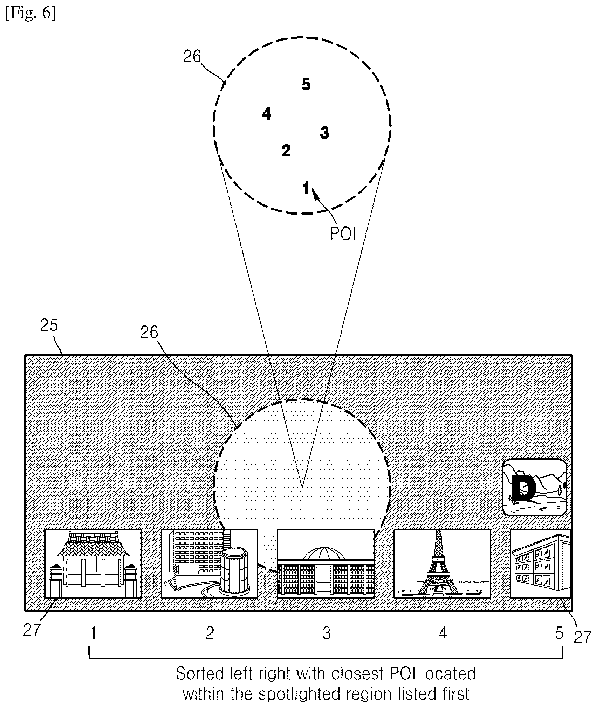

The discovery module sorts point-of-interest search results by listing locations closest to the user first (e.g., left most, in a horizontal row, as shown in FIG. 6).

In one embodiment, the discovery module continuously scans the surroundings, captures images in the background via the camera, and recognizes content (objects) within the captured images (e.g., within live view space). The object-based recognition module performs object recognition in the captured images, which is used to deliver nearby, "related" search results, in addition to the main object/location.

The object-based recognition module provides object-based recognition as images are captured and delivers search results (e.g., POI information) for multiple objects (e.g., nearby attractions).

In one embodiment, the discovery module provides AR visual sort of nearby points of interest by both proximity and distance. The discovery module provides spotlight view, which allows a user to visually frame at least one point of interest in captured images. The discovery module displays points of interest in a visually intuitive manner (e.g., drop pin and thumbnails). The discovery module provides the user quick access to detailed point of interest information, maps, and directions.

Referring to the sequence in FIGS. 2A-2C, when the user aims the mobile device 20 toward surrounding environment (e.g., city landscape) an image 25 is displayed on the display 21 as captured by the camera module 15. Once the discovery module 11 is activated by the user to help user frame content of interest, the discovery module provides augmented reality arrangement and display of nearby points-of-interest information on the mobile device 20, as described below.

As shown in FIG. 2A, the discovery module 11 displays a "spotlight" (i.e., area) 26 on the image 25 to help the user frame content of interest. The user taps on the discover icon 31 to activate this mode 31. Once the user has framed content of interest as area 26, the spotlight 26 "locks in" and disappears.

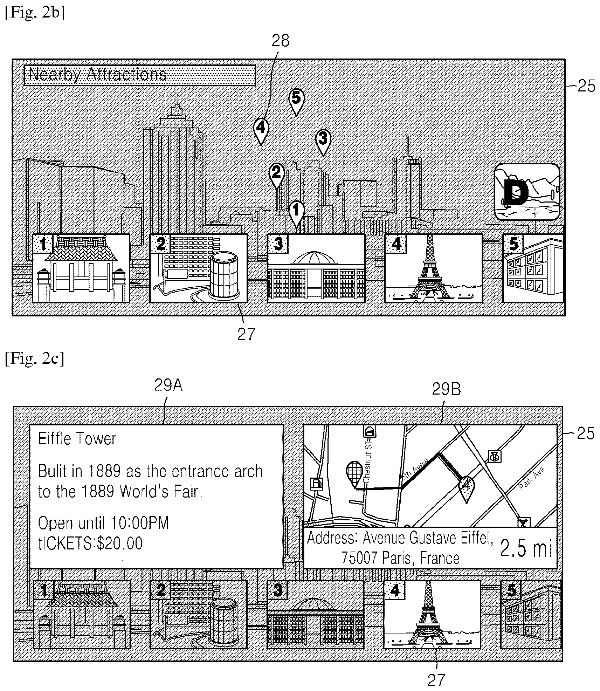

As shown in FIG. 2B, the discovery module 11 display of points of interest (e.g., nearby attractions) on the image 25 for the objects identified in the content of interest in the spotlight 26 by the object recognition module 12. The points-of-interest information is obtained by the location-based information module 13.

The augmented reality module 14 displays information for points of interest (POIs) such as nearby attractions as a row of thumbnails 27 and also displays corresponding location pins 28 that drop into view on the image 25.

As shown in FIG. 2C, when the user selects a nearby attraction thumbnail 27, the discovery module 11 provides detailed location information 29A, as well as a map 29B that displays point-to-point direction information.

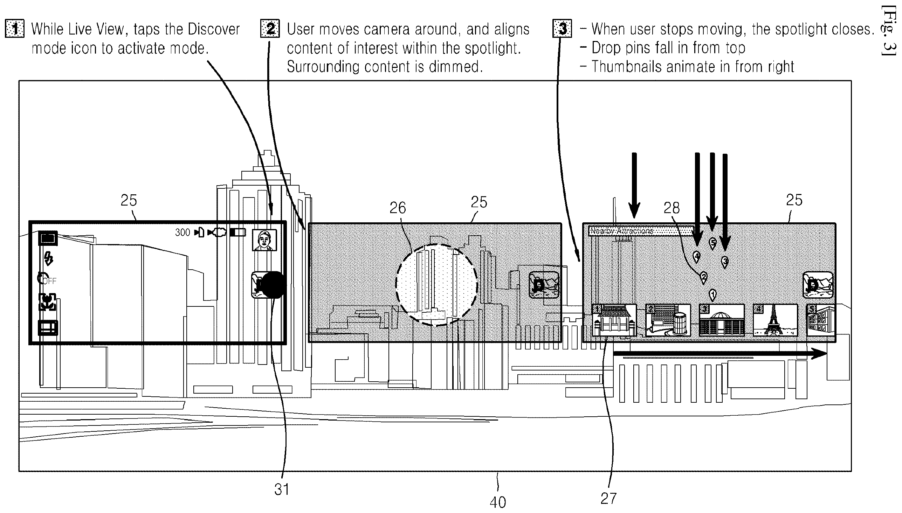

FIG. 3 illustrates a physical location such as a city location 40, wherein in live capture view (where the user is able to capture images or video, the user first taps on discover icon 31 to activate the discover mode 31) the user aims the mobile device camera at a portion of the city location 40 and a corresponding image 25 is displayed on the mobile device display 21.

Referring to the sequence in FIG. 3, in a first phase, the user activates the discovery module 11 (e.g., by tapping on an icon 31 displayed on the image 25 for activating discovery mode). The user then moves the mobile device camera around, wherein the image 25 on the device display 21 displays the portion of the city location 40 within field of view of the camera.

In a second phase, the user then aligns content of interest within a spotlight 26 in the image 25. Surrounding content around the spotlight 26 in the image 25 is dimmed.

In a third phase, when the user stops moving the mobile device camera (as sensed by the accelerometer and gyroscope module 18), the spotlight 26 is closed and drop pins 28 fall in from top on points of interest, and thumbnails 27 animate in from right (similar to the process described in relation to FIGS. 2A-2C above).

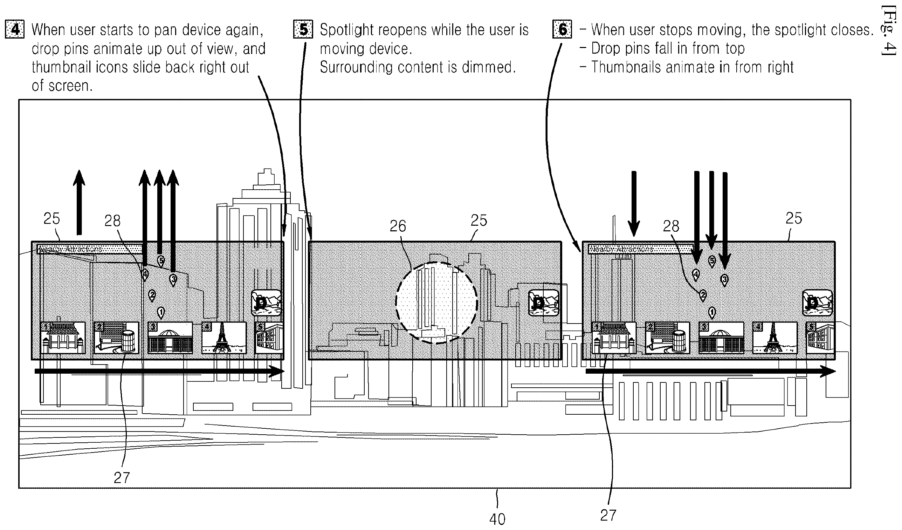

Referring to the sequence in FIG. 4, in a fourth phase when the user starts to pan the mobile device again, wherein drop pins 28 animate up out of view in the image 25, and thumbnail icons 27 slide back out of the image 25.

In a fifth phase, the spotlight 26 reopens while the user is moving the mobile device camera, while content surrounding the spotlight 26 in the image 25 is dimmed. In a sixth phase, when the user stops moving the mobile device camera, again the spotlight 26 closes, drop pins 28 fall into image 25 from top, and thumbnails 27 animate into the image 25 from right.

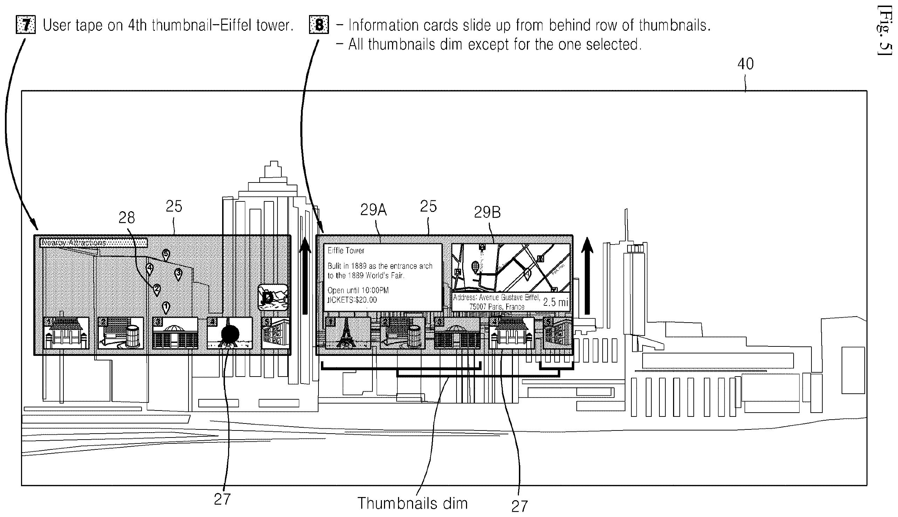

Referring to the sequence in FIG. 5, in a seventh phase, the user taps on a 4th thumbnail 27 from left (e.g., Eiffel tower), wherein in an eight phase, information cards 29A and 29B slide up from behind the row of thumbnails 27. All thumbnails dim except for the one thumbnail selected.

FIG. 6 illustrates a diagrammatical example of augmented reality arrangement and display of POIs detected within the spotlight region 26, sorted left to right with closest POI located within the spotlight region 26 listed first.

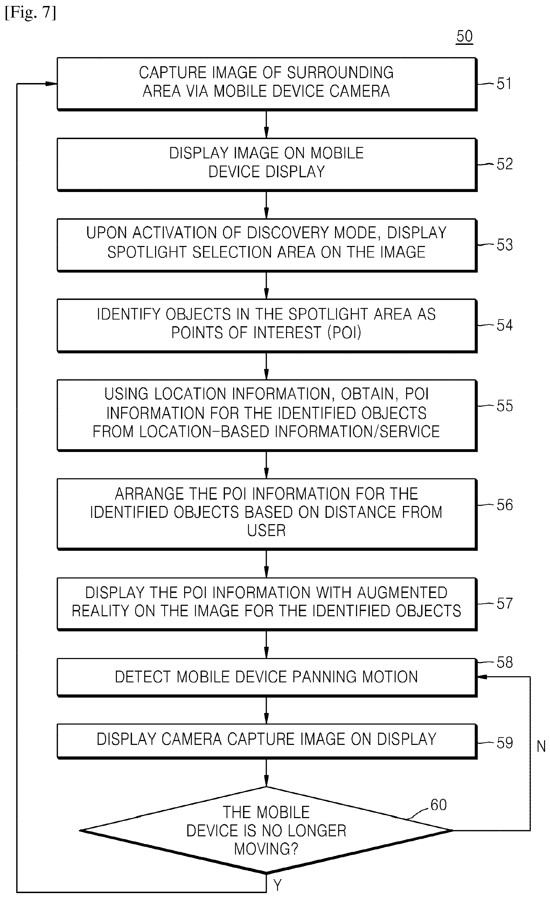

FIG. 7 shows a flowchart of a discovery process 50 for augmented reality arrangement of nearby location information, according to an embodiment of the invention. Process block 51 comprises capturing an image of surrounding area via mobile device camera. Process block 52 comprises displaying the image on the mobile device display. Process block 53 comprises, upon activation of discovery mode, displaying a spotlight area on the image. Process block 54 comprises identifying objects in the spotlight area as points of interest (POI).

Process block 55 comprises using location information, obtaining POI information for the identified objects from location-based information/service. Process block 56 comprises arranging the POI information for the identified objects based on distance from user.

Process block 57 comprises displaying the POI information with augmented reality on the image for the identified objects. Process block 58 comprises detecting mobile device motion. Process block 59 comprises displaying camera-captured images on the mobile device display. Process block 60 comprises, upon detecting that the mobile device is no longer moving, proceeding to process block 51.

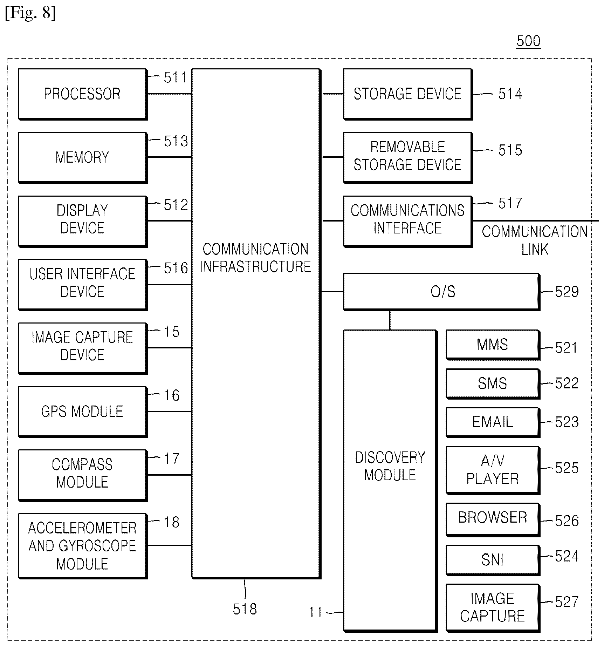

FIG. 8 is a high-level block diagram showing an information processing system comprising a computing system 500 implementing an embodiment of the present invention. The system 500 includes one or more processors 511 (e.g., ASIC, CPU, etc.), and can further include an electronic display device 512 (for displaying graphics, text, and other data), a main memory 513 (e.g., random access memory (RAM)), storage device 514 (e.g., hard disk drive), removable storage device 515 (e.g., removable storage drive, removable memory module, a magnetic tape drive, optical disk drive, computer-readable medium having stored therein computer software and/or data), user interface device 516 (e.g., keyboard, touch screen, keypad, pointing device), and a communication interface 517 (e.g., modem, wireless transceiver (such as WiFi, Cellular), a network interface (such as an Ethernet card), a communications port, or a PCMCIA slot and card). The communication interface 517 allows software and data to be transferred between the computer system and external devices. The system 500 further includes a communications infrastructure 518 (e.g., a communications bus, cross-over bar, or network) to which the aforementioned devices/modules 511 through 517 are connected.

The information transferred via communications interface 517 may be in the form of signals such as electronic, electromagnetic, optical, or other signals capable of being received by communications interface 517, via a communication link that carries signals and may be implemented using wire or cable, fiber optics, a phone line, a cellular phone link, an radio frequency (RF) link, and/or other communication channels.

In one implementation of the invention in a mobile wireless device such as a mobile phone, the system 500 further includes an image capture device such as a camera 15. The system 500 may further include application modules as MMS module 521, SMS module 522, email module 523, social network interface (SNI) module 524, audio/ video (AV) player 525, web browser 526, image capture module 527, etc.

The system 500 further includes a discovery module 11 as described herein, according to an embodiment of the invention. In one implementation of said discovery module 11 along an operating system 529 may be implemented as executable code residing in a memory of the system 500. In another embodiment, such modules are in firmware, etc.

As is known to those skilled in the art, the aforementioned example architectures described above, according to said architectures, can be implemented in many ways, such as program instructions for execution by a processor, as software modules, microcode, as computer program product on computer readable media, as analog/logic circuits, as application specific integrated circuits, as firmware, as consumer electronic devices, AV devices, wireless/wired transmitters, wireless/wired receivers, networks, multi-media devices, etc. Further, embodiments of said Architecture can take the form of an entirely hardware embodiment, an entirely software embodiment or an embodiment containing both hardware and software elements.

Embodiments of the present invention have been described with reference to flowchart illustrations and/or block diagrams of methods, apparatus (systems) and computer program products according to embodiments of the invention. Each block of such illustrations/diagrams, or combinations thereof, can be implemented by computer program instructions. The computer program instructions when provided to a processor produce a machine, such that the instructions, which execute via the processor create means for implementing the functions/operations specified in the flowchart and/or block diagram. Each block in the flowchart/block diagrams may represent a hardware and/or software module or logic, implementing embodiments of the present invention. In alternative implementations, the functions noted in the blocks may occur out of the order noted in the figures, concurrently, etc.

The terms "computer program medium," "computer usable medium," "computer readable medium", and "computer program product," are used to generally refer to media such as main memory, secondary memory, removable storage drive, a hard disk installed in hard disk drive. These computer program products are means for providing software to the computer system. The computer readable medium allows the computer system to read data, instructions, messages or message packets, and other computer readable information from the computer readable medium. The computer readable medium, for example, may include non-volatile memory, such as a floppy disk, ROM, flash memory, disk drive memory, a CD-ROM, and other permanent storage. It is useful, for example, for transporting information, such as data and computer instructions, between computer systems. Computer program instructions may be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/ or block diagram block or blocks.

Computer program instructions representing the block diagram and/or flowcharts herein may be loaded onto a computer, programmable data processing apparatus, or processing devices to cause a series of operations performed thereon to produce a computer implemented process. Computer programs (i.e., computer control logic) are stored in main memory and/or secondary memory. Computer programs may also be received via a communications interface. Such computer programs, when executed, enable the computer system to perform the features of the present invention as discussed herein. In particular, the computer programs, when executed, enable the processor and/or multi-core processor to perform the features of the computer system. Such computer programs represent controllers of the computer system. A computer program product comprises a tangible storage medium readable by a computer system and storing instructions for execution by the computer system for performing a method of the invention.

Though the present invention has been described with reference to certain versions thereof; however, other versions are possible. Therefore, the scope of the appended claims should not be limited to the description of the preferred versions contained herein.

### Industrial Applicability

The present invention relates to an electronic device, a information display method and may be applied to mobile device include a mobile phone device, a mobile tablet device, etc.

## Claims

1. A method of displaying information of interest to a user on a mobile electronic device, comprising:
capturing an image of a surrounding area via a camera of the mobile electronic device;
displaying the image on a display of the mobile electronic device;
when a user moves the camera, displaying a spotlight on the image thereby framing a portion of the image relative to surrounding content of the captured image;
when the user stops moving the camera:
identifying objects of interest within the framed portion of the image as points of interest, POI, to the user;
obtaining POI information about the points of interest;
arranging said POI information by sorting and displaying the POI information based on distance from the user, the POI information for respective points of interest being displayed as corresponding thumbnails in a row of thumbnails corresponding to the identified objects; and
displaying the arranged POI information with augmented reality on said image for the identified objects.

2. The method of claim 1, further comprising:
displaying the spotlight and dimming the surrounding content when the camera is moving and closing the spotlight when the user stops moving the camera.

3. The method of claim 2, wherein obtaining information about the points of interest comprises:
detecting a geographical location of the mobile electronic device; and
using the location information to obtain POI information from a location-based information service.

4. The method of claim 2 or claim 3 , further comprising:
detecting panning of the camera of the mobile electronic device,
displaying the spotlight on the image thereby framing a portion of the image based on the position of the spotlight displayed on the screen during panning, and
upon detecting completion of panning:
capturing an image of the surrounding area via the camera;
displaying the image on a display of the mobile electronic device;
identifying objects of interest within the framed portion of the image as points of interest, POI, to the user, the user having aligned at least one content of interest within the spotlight while panning the camera;
obtaining POI information about the points of interest;
arranging said POI information by sorting and displaying the POI information based on distance from the user, the POI information for respective points of interest being displayed as corresponding thumbnails in a row of thumbnails corresponding to the identified objects; and
displaying the arranged POI information with augmented reality on the image for the identified objects.

5. The method of claim 1 or claim 4, further comprising:
detecting user selection of a thumbnail and displaying further information for the POI corresponding to the selected thumbnail.

6. The method of claim 1, wherein the mobile electronic device comprises a mobile phone.

7. A mobile electronic device (10), comprising:
a video camera (15);
a display (21); and
a discovery module (11) configured to:
display information of interest to a user on the display based on an image of captured via the video camera (15) of the mobile electronic device and
display a spotlight on the image thereby framing, when a user moves the video camera (15), a portion of the image relative to surrounding content of the captured image;
wherein, when the user stops moving the video camera (15), the discovery module (11) is further configured to:
identify objects of interest within the framed portion of the image as points of interest, POI, to the user,
obtain POI information about the points of interest,
arrange said POI information by sorting and displaying the POI information based on distance from the user, the POI information for respective points of interest being displayed as corresponding thumbnails in a row of thumbnails corresponding to the identified objects, and
display the arranged information with augmented reality on said image for the identified objects.

8. The mobile electronic device of claim 7, wherein the spotlight is displayed and the surrounding content is dimmed when the video camera is moving and the spotlight is closed when the user stops moving the video camera.

9. The mobile electronic device of claim 8, wherein the discovery module obtains information about the points of interest by detecting a geographical location of the mobile electronic device, and using the location information to obtain POI information from a location-based information service.

10. The mobile electronic device of claim 8 or claim 9, wherein the discovery module is further configured to:
detect panning of the camera of the mobile electronic device,
display the spotlight on the image thereby framing a portion of the image based on the position of the spotlight displayed on the screen during panning, and
upon detecting completion of panning, to:
capture an image of the surrounding area via the camera;
display the image on a display of the mobile electronic device;
identify objects of interest within the framed portion of the image as points of interest, POI, to the user, the user having aligned at least one content of interest within the spotlight while panning the camera;
obtain POI information about the points of interest;
arrange said POI information by sorting and displaying the POI information based on distance from the user, the POI information for respective points of interest being displayed as corresponding thumbnails in a row of thumbnails corresponding to the identified objects; and
displays the arranged POI information with augmented reality on the image for the identified objects.

11. The mobile electronic device of claim 10, wherein the discovery module detects user selection of a thumbnail and displays further information for the POI corresponding to the selected thumbnail.

12. The mobile electronic device of claim 7, wherein the mobile electronic device comprises a mobile phone.

## Patentansprüche

1. Verfahren zur Anzeige von Information auf einem mobilen elektronischen Gerät, die für einen Benutzer von Interesse ist, umfassend:
Erfassen eines Bildes eines Umgebungsreichs über eine Kamera des mobilen elektronischen Geräts;
Anzeigen des Bildes auf einem Bildschirm des mobilen elektronischen Geräts;
wenn ein Benutzer die Kamera bewegt, Anzeigen eines Spotlights auf dem Bild, um dadurch einen Teil des Bildes relativ zum umgebenden Inhalt des erfassten Bildes zu rahmen;
wenn der Benutzer stoppt die Kamera zu bewegen:
Identifizieren von Objekten von Interesse im gerahmten Teil des Bildes als Punkte von Interesse, POI, für den Benutzer;
Erlangen von POI-Information über die Punkte von Interesse;
Anordnen der POI-Information durch Sortieren und Anzeigen der POI-Information auf Basis von Abstand vom Benutzer, wobei die POI-Information für jeweilige Punkte von Interesse als entsprechende Thumbnails in einer Reihe von Thumbnails, die den identifizierten Objekten entsprechen, angezeigt wird; und
Anzeigen der angeordneten POI-Information mit erweiterter Realität auf dem Bild für die identifizierten Objekte.

2. Verfahren nach Anspruch 1, ferner umfassend:
Anzeigen des Spotlights und Dimmen des Umgebungsinhalts, wenn sich die Kamera bewegt und Schließen des Spotlights, wenn der Benutzer aufhört die Kamera zu bewegen.

3. Verfahren nach Anspruch 2, wobei das Erlangen von Information über Punkte von Interesse umfasst:
Detektieren des geografischen Orts des mobilen elektronischen Geräts; und
Verwenden der Ortsinformation zum Erlangen von POI-Information von einem standortbezogenen Informationsdienst.

4. Verfahren nach Anspruch 2 oder 3, ferner umfassend:
Detektieren von Schwenken der Kamera des mobilen elektronischen Geräts,
Anzeigen des Spotlights auf dem Bild, dadurch wird ein Teil des Bildes auf Basis der Position des Spotlights gerahmt, der auf dem Bildschirm beim Schwenken angezeigt wird, und
nach Detektieren der Beendigung des Schwenkvorgangs:
Erfassen eines Bildes des Umgebungsbereichs über die Kamera;
Anzeigen des Bildes auf einem Bildschirm des mobilen elektronischen Geräts;
Identifizieren von Objekten von Interesse im gerahmten Teil des Bildes als Punkte von Interesse, POI, für den Benutzer, wobei der Benutzer mindestens einen Inhalt von Interesse innerhalb des Spotlights, während der Schwenkung der Kamera, ausgerichtet hat;
Erlangen von POI-Information über die Punkte von Interesse;
Anordnen der POI-Information durch Sortieren und Anzeigen der POI-Information auf Basis von Abstand vom Benutzer, wobei die POI-Information für jeweilige Punkte von Interesse als entsprechende Thumbnails in einer Reihe von Thumbnails, die den identifizierten Objekten entsprechen, angezeigt wird; und
Anzeigen der angeordneten POI-Information mit erweiterter Realität auf dem Bild für die identifizierten Objekte.

5. Verfahren nach Anspruch 1 oder Anspruch 4, ferner umfassend:
Detektieren der Wahl eines Thumbnails durch den Benutzer und Anzeigen weiterer Information für den POI, der dem selektierten Thumbnail entspricht.

6. Verfahren nach Anspruch 1, wobei das mobile elektronische Gerät ein Mobiltelefon umfasst.

7. Mobile elektronische Vorrichtung (10), umfassend:
eine Videokamera (15);
einen Bildschirm (21);
ein Entdeckungsmodul (11), das ausgelegt ist, Folgendes zu tun:
Anzeigen von Information von Interesse für einen Benutzer auf dem Bildschirm auf Basis eines über die Kamera (15) des mobilen elektronischen Geräts erfassten Bildes und
Anzeigen eines Spotlights auf dem Bild, um dadurch, wenn ein Benutzer die Videokamera (15) bewegt, einen Teil des Bildes relativ zum Umgebungsinhalt des erfassten Bildes zu rahmen;
wobei, wenn der Benutzer aufhört die Videokamera (15) zu bewegen, das Entdeckungsmodul (11) ferner ausgelegt ist, Folgendes zu tun:
Identifizieren von Objekten von Interesse im gerahmten Teil des Bildes als Punkte von Interesse, POI, für den Benutzer,
Erlangen von POI-Information über die Punkte von Interesse,
Anordnen der POI-Information durch Sortieren und Anzeigen der POI-Information auf Basis von Abstand vom Benutzer, wobei die POI-Information für jeweilige Punkte von Interesse als entsprechende Thumbnails in einer Reihe von Thumbnails, die den identifizierten Objekten entsprechen, angezeigt wird, und
Anzeigen der angeordneten Information mit erweiterter Realität auf dem Bild für die identifizierten Objekte.

8. Mobiles elektronische Gerät nach Anspruch 7, wobei das Spotlight angezeigt wird und der Umgebungsinhalt gedimmt wird, wenn sich die Videokamera bewegt und das Spotlight geschlossen wird, wenn der Benutzer aufhört, die Videokamera zu bewegen.

9. Mobiles elektronische Gerät nach Anspruch 8, wobei das Entdeckungsmodul Information über die Punkte von Interesse durch Detektieren eines geografischen Orts des mobilen elektronischen Geräts erlangt und die Ortsinformation zum Erlangen von POI-Information von einem standortbezogenen Informationsdienst benutzt.

10. Mobiles elektronische Gerät nach Anspruch 8 oder Anspruch 9, wobei das Entdeckungsmodul ferner ausgelegt ist, Folgendes zu tun:
Detektieren von Schwenken der Kamera des mobilen elektronischen Geräts,
Anzeigen des Spotlights auf dem Bild, dadurch wird ein Teil des Bildes auf Basis der Position des Spotlights gerahmt, der auf dem Bildschirm beim Schwenken angezeigt wird, und
nach Detektieren der Beendigung des Schwenkvorgangs, Folgendes zu tun:
Erfassen eines Bildes des Umgebungsbereichs über die Kamera;
Anzeigen des Bildes auf einem Bildschirm des mobilen elektronischen Geräts;
Identifizieren von Objekten von Interesse im gerahmten Teil des Bildes als Punkte von Interesse, POI, für den Benutzer, wobei der Benutzer mindestens einen Inhalt von Interesse innerhalb des Spotlights, während der Schwenkung der Kamera, ausgerichtet hat;
Erlangen von POI-Information über die Punkte von Interesse;
Anordnen der POI-Information durch Sortieren und Anzeigen der POI-Information auf Basis von Abstand vom Benutzer, wobei die POI-Information für jeweilige Punkte von Interesse als entsprechende Thumbnails in einer Reihe von Thumbnails, die den identifizierten Objekten entsprechen, angezeigt wird, und
Anzeigen der angeordneten POI-Information mit erweiterter Realität auf dem Bild für die identifizierten Objekte.

11. Mobiles elektronische Gerät nach Anspruch 10, wobei das Entdeckungsmodul die Benutzerwahl eines Thumbnails detektiert und weitere Information für den POI (Punkt von Interesse) anzeigt, der dem selektierten Thumbnail entspricht.

12. Mobiles elektronische Gerät nach Anspruch 7, wobei das mobile elektronische Gerät ein Mobiltelefon umfasst.

## Revendications

1. Un procédé d'affichage d'informations présentant un intérêt pour un utilisateur sur un dispositif électronique mobile, comprenant :
la capture d'une image d'une zone environnante par l'intermédiaire d'une caméra du dispositif électronique mobile,
l'affichage de l'image sur un dispositif d'affichage du dispositif électronique mobile,
lorsqu'un utilisateur déplace la caméra, l'affichage d'un projecteur lumineux sur l'image, encadrant ainsi une partie de l'image par rapport à un contenu environnant de l'image capturée,
lorsque l'utilisateur arrête le déplacement de la caméra :
l'identification d'objets d'intérêt à l'intérieur de la partie encadrée de l'image sous la forme de points d'intérêt, POI, pour l'utilisateur,
l'obtention d'informations de POI relatives aux points d'intérêt,
l'agencement desdites informations de POI par le tri et l'affichage des informations de POI en fonction d'une distance à partir de l'utilisateur, les informations de POI relatives à des points d'intérêt respectifs étant affichées sous la forme de vignettes correspondantes dans une rangée de vignettes correspondant aux objets identifiés, et
l'affichage des informations de POI agencées avec de la réalité augmentée sur ladite image pour les objets identifiés.

2. Le procédé selon la Revendication 1, comprenant en outre :
l'affichage du projecteur lumineux et l'atténuation de l'éclairage du contenu environnant lorsque la caméra se déplace et la fermeture du projecteur lumineux lorsque l'utilisateur arrête le déplacement de la caméra.

3. Le procédé selon la Revendication 2, où l'obtention d'informations relatives aux points d'intérêt comprend :
la détection d'un emplacement géographique du dispositif électronique mobile, et
l'utilisation des informations de localisation de façon à obtenir des informations de POI à partir d'un service d'informations basé sur l'emplacement.

4. Le procédé selon la Revendication 2 ou 3, comprenant en outre :
la détection d'un déplacement en panoramique de la caméra du dispositif électronique mobile,
l'affichage du projecteur lumineux sur l'image, encadrant ainsi une partie de l'image en fonction de la position du projecteur lumineux affiché sur l'écran au cours d'un déplacement en panoramique, et
après la détection de l'achèvement d'un déplacement en panoramique :
la capture d'une image de la zone environnante par l'intermédiaire de la caméra,
l'affichage de l'image sur un dispositif d'affichage du dispositif électronique mobile,
l'identification d'objets d'intérêt à l'intérieur de la partie encadrée de l'image sous la forme de points d'intérêt, POI, pour l'utilisateur, l'utilisateur ayant aligné au moins un contenu d'intérêt à l'intérieur du projecteur lumineux pendant un déplacement en panoramique de la caméra,
l'obtention d'informations de POI relatives aux points d'intérêt,
l'agencement desdites informations de POI par le tri et l'affichage des informations de POI en fonction d'une distance à partir de l'utilisateur, les informations de POI relatives à des points d'intérêt respectifs étant affichées sous la forme de vignettes correspondantes dans une rangée de vignettes correspondant aux objets identifiés, et
l'affichage des informations de POI agencées avec de la réalité augmentée sur l'image pour les objets identifiés.

5. Le procédé selon la Revendication 1 ou 4, comprenant en outre :
la détection d'une sélection d'utilisateur d'une vignette et l'affichage d'informations complémentaires relatives au POI correspondant à la vignette sélectionnée.

6. Le procédé selon la Revendication 1, où le dispositif électronique mobile comprend un téléphone mobile.

7. Un dispositif électronique mobile (10), comprenant :
une caméra vidéo (15),
un dispositif d'affichage (21), et
un module de découverte (11) configuré de façon à :
afficher des informations présentant un intérêt pour un utilisateur sur le dispositif d'affichage en fonction d'une image capturée par l'intermédiaire de la caméra vidéo (15) du dispositif électronique mobile, et
afficher un projecteur lumineux sur l'image, encadrant ainsi, lorsqu'un utilisateur déplace la caméra vidéo (15), une partie de l'image par rapport à un contenu environnant de l'image capturée,
où, lorsque l'utilisateur arrête le déplacement de la caméra vidéo (15), le module de découverte (11) est configuré en outre de façon à :
identifier des objets d'intérêt à l'intérieur de la partie encadrée de l'image sous la forme de points d'intérêt, POI, pour l'utilisateur,
obtenir des informations de POI relatives aux points d'intérêt,
agencer lesdites informations de POI par le tri et l'affichage des informations de POI en fonction d'une distance à partir de l'utilisateur, les informations de POI relatives à des points d'intérêt respectifs étant affichées sous la forme de vignettes correspondantes dans une rangée de vignettes correspondant aux objets identifiés, et
afficher les informations agencées avec de la réalité augmentée sur ladite image pour les objets identifiés.

8. Le dispositif électronique mobile selon la Revendication 7, où le projecteur lumineux est affiché et l'éclairage du contenu environnant est atténué lorsque la caméra vidéo se déplace et le projecteur lumineux est refermé lorsque l'utilisateur arrête le déplacement de la caméra vidéo.

9. Le dispositif électronique mobile selon la Revendication 8, où le module de découverte obtient des informations relatives aux points d'intérêt par la détection d'un emplacement géographique du dispositif électronique mobile, et l'utilisation des informations de localisation de façon à obtenir des informations de POI à partir d'un service d'informations basé sur l'emplacement.

10. Le dispositif électronique mobile selon la Revendication 8 ou 9, où le module de découverte est configuré en outre de façon à :
détecter un déplacement en panoramique de la caméra du dispositif électronique mobile,
afficher le projecteur lumineux sur l'image, encadrant ainsi une partie de l'image en fonction de la position du projecteur lumineux affiché sur l'écran au cours d'un déplacement en panoramique, et
après la détection de l'achèvement d'un déplacement en panoramique, de façon à :
capturer une image de la zone environnante par l'intermédiaire de la caméra,
afficher l'image sur un dispositif d'affichage du dispositif électronique mobile,
identifier des objets d'intérêt à l'intérieur de la partie encadrée de l'image sous la forme de points d'intérêt, POI, pour l'utilisateur, l'utilisateur ayant aligné au moins un contenu d'intérêt à l'intérieur du projecteur lumineux pendant un déplacement en panoramique de la caméra,
obtenir des informations de POI relatives aux points d'intérêt,
agencer lesdites informations de POI par le tri et l'affichage des informations de POI en fonction d'une distance à partir de l'utilisateur, les informations de POI relatives à des points d'intérêt respectifs étant affichées sous la forme de vignettes correspondantes dans une rangée de vignettes correspondant aux objets identifiés, et
afficher les informations de POI agencées avec de la réalité augmentée sur l'image pour les objets identifiés.

11. Le dispositif électronique mobile selon la Revendication 10, où le module de découverte détecte une sélection d'utilisateur d'une vignette et affiche des informations complémentaires relatives au POI correspondant à la vignette sélectionnée.

12. Le dispositif électronique mobile selon la Revendication 7, où le dispositif électronique mobile comprend un téléphone mobile.
